# EUROPEAN PATENT APPLICATION

(11) **EP 4 773 321 A1**
(43) Date of publication of application: **08.07.2026**
(21) Application number: 24859543.1
(22) Date of filing: 20.08.2024
(51) Int. Cl.: H01M 10/0587, H01M 4/13

(54) **NONAQUEOUS ELECTROLYTE SECONDARY BATTERY**

(30) Priority: 31.08.2023 JP 2023140740
(71) Applicant: Panasonic Intellectual Property Management Co., Ltd., Kadoma-shi, Osaka 571-0057 (JP)
(72) Inventor: HIRATA, Takuya, Osaka 571-0057 (JP)
(74) Representative: Eisenführ Speiser
(86) International application number: PCT/JP2024/029496
(87) International publication number: WO 2025/047510

(57) **Abstract**

The present invention provides a nonaqueous electrolyte secondary battery in which electrode plate deformation near a winding start end part of a positive electrode caused by charge/discharge cycles can be suppressed.

Disclosed is a nonaqueous electrolyte secondary battery in which a negative electrode (12) that constitutes a wound electrode body has a negative electrode mixture layer (32). The negative electrode mixture layer (32) has: a non-facing part (12a) that is disposed on the inner end side in the winding direction of the electrode body and does not face a positive electrode (11) with a separator interposed therebetween; and a facing part (12b) that is disposed on the outer side, in the winding direction, from the outer end in the winding direction of the non-facing part (12a) and that faces the positive electrode (11) with the separator interposed therebetween. The length of the non-facing part (12a) in the winding direction is not less than 0.3 turns. The inner circumferential surface of the negative electrode mixture layer (32) is provided with a recess (33) that straddles the boundary between the non-facing part (12a) and the facing part (12b), and the length of the recess (33) in the winding direction from the boundary to the outer end in the winding direction of the recess 33 is less than one turn.

## Description

### TECHNICAL FIELD

The present disclosure relates to a non-aqueous electrolyte secondary battery.

### BACKGROUND

In recent years, as a secondary battery having high output and high energy density, a non-aqueous electrolyte secondary battery including an electrode assembly in which a positive electrode and a negative electrode are arranged to face each other with a separator interposed therebetween has been widely used.

For example, Patent Literature 1 discloses a non-aqueous electrolyte secondary battery including a wound electrode assembly in which a positive electrode and a negative electrode are wound with a separator interposed therebetween. The negative electrode includes a non-facing portion wound greater than or equal to 1.25 turns from an inner end in a winding direction of the wound electrode assembly in a state of not facing the positive electrode with the separator interposed therebetween, the non-facing portion includes a negative electrode mixture layer-formed portion in which the negative electrode mixture layer is formed on at least one surface continuously from an outer end in the winding direction toward an inner side in the winding direction, and the negative electrode mixture layer-formed portion is wound greater than or equal to 0.75 turns.

As in Patent Literature 1, by providing the non-facing portion not facing the positive electrode on the inner end side in the winding direction of the electrode assembly in the negative electrode, the degree of circularity of a winding core (central portion) of the electrode assembly can be improved. Thus, for example, the gas release property of the winding core can be maintained, so that the safety of a battery is achieved.

### CITATION LIST

### PATENT LITERATURE

Patent Literature 1: WO 2018/116876 A
Patent Literature 2: JP H11-111327 A
Patent Literature 3: JP H11-265706 A
Patent Literature 4: WO 2018/180748 A

### SUMMARY

Incidentally, in a non-aqueous electrolyte secondary battery including a wound electrode assembly, when the electrode assembly expands with charge/discharge cycles, stress is locally applied to the central portion of the electrode assembly, and electrode plate deformation may occur near the winding start end portion of the positive electrode.

Therefore, an object of the present disclosure is to provide a non-aqueous electrolyte secondary battery in which electrode plate deformation near a winding start end portion of a positive electrode caused by charge/discharge cycles can be suppressed.

A non-aqueous electrolyte secondary battery according to the present disclosure includes: an electrode assembly in which a positive electrode and a negative electrode are wound with a separator interposed therebetween; and a non-aqueous electrolyte, wherein the negative electrode includes a negative electrode mixture layer disposed on at least a surface of the negative electrode core, the negative electrode mixture layer includes a non-facing portion disposed on an inner end side in a winding direction of the electrode assembly and not facing the positive electrode with the separator interposed therebetween, and a facing portion disposed on an outer side in the winding direction from an outer end in the winding direction of the non-facing portion and facing the positive electrode with the separator interposed therebetween, a length in the winding direction of the non-facing portion is a length of greater than or equal to 0.3 turns, a recess straddling a boundary between the non-facing portion and the facing portion is formed on an inner peripheral-side surface of the negative electrode mixture layer, and a length in the winding direction of the recess from the boundary to an outer end in the winding direction of the recess is a length of less than 1 turn.

According to the present disclosure, it is possible to provide a non-aqueous electrolyte secondary battery in which electrode plate deformation near a winding start end portion of a positive electrode caused by charge/discharge cycles can be suppressed.

### BRIEF DESCRIPTION OF DRAWINGS

FIG. 1 is a schematic cross-sectional view of a non-aqueous electrolyte secondary battery as an example of an embodiment.
FIG. 2 is a view schematically illustrating a portion on an inner end side in a winding direction of an electrode assembly in a cross section taken along line A-A of FIG. 1.
FIG. 3 is a schematic cross-sectional view illustrating configurations of a negative electrode and a positive electrode on the inner end side in the winding direction of the electrode assembly.
FIG. 4 is a schematic cross-sectional view illustrating a state on a winding start end portion side of a negative electrode and a positive electrode before winding.

### DESCRIPTION OF EMBODIMENTS

Hereinafter, an example of an embodiment of a non-aqueous electrolyte secondary battery according to the present disclosure will be described in detail.

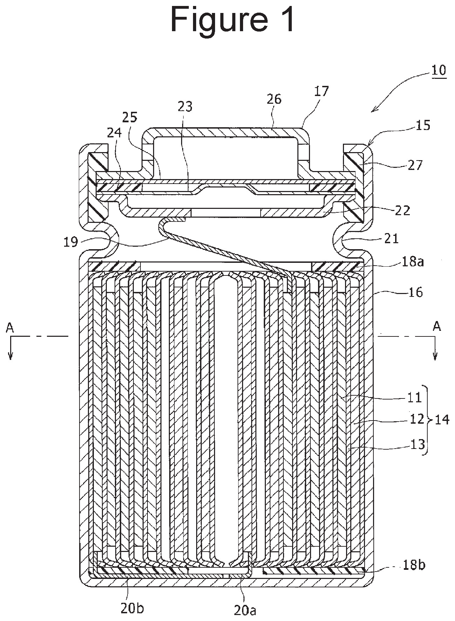

FIG. 1 is a schematic cross-sectional view of a non-aqueous electrolyte secondary battery as an example of an embodiment. A non-aqueous electrolyte secondary battery 10 illustrated in FIG. 1 includes a wound-type electrode assembly 14 formed by winding a positive electrode 11 and a negative electrode 12 with a separator 13 interposed therebetween, a non-aqueous electrolyte, insulating plates 18a and 18b disposed above and below the electrode assembly 14, respectively, and a battery case 15 as an exterior body. The battery case 15 includes a case body 16 that houses the electrode assembly 14, the non-aqueous electrolyte, and the like, and a sealing assembly 17 that closes an opening of the case body 16. The battery case 15 is not limited to a cylindrical or rectangular metal case, and may be, for example, a resin case (a so-called pouch-type case) formed by laminating a resin sheet.

The non-aqueous electrolyte has, for example, ion conductivity (for example, lithium ion conductivity). The non-aqueous electrolyte may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

As the solid electrolyte, for example, a solid or gel polymer electrolyte, an inorganic solid electrolyte, or the like can be used. For example, the polymer electrolyte contains a lithium salt and a matrix polymer or contains a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. Examples of the inorganic solid electrolyte include materials (for example, oxide-based solid electrolytes, sulfide-based solid electrolytes, and halogen-based solid electrolytes) known for all-solid-state lithium ion secondary batteries and the like.

The case body 16 is, for example, a bottomed cylindrical metal container. A gasket 27 is provided between the case body 16 and the sealing assembly 17 to ensure airtightness within the battery. The case body 16 has a projecting portion 21 in which, for example, a part of the side surface thereof projects inward to support the sealing assembly 17. The projecting portion 21 is preferably formed in an annular shape in the circumferential direction of the case body 16, and supports the sealing assembly 17 on the upper surface thereof.

The sealing assembly 17 has a structure in which a filter 22, a lower vent member 23, an insulating member 24, an upper vent member 25, and a cap 26 are stacked sequentially from the electrode assembly 14 side. Each member constituting the sealing assembly 17 has, for example, a disk shape or a ring shape, and the members excluding the insulating member 24 are electrically connected to each other. The lower vent member 23 and the upper vent member 25 are connected to each other at their central portions, and the insulating member 24 is interposed between peripheral edges of the lower vent member 23 and the upper vent member 25. When the internal pressure of the non-aqueous electrolyte secondary battery 10 increases due to heat generation caused by an internal short circuit or the like, for example, the lower vent member 23 is deformed to push up the upper vent member 25 toward the cap 26 side and is broken, and a current path between the lower vent member 23 and the upper vent member 25 is cut off. When the internal pressure further increases, the upper vent member 25 breaks, and gas is discharged from an opening of the cap 26.

In the non-aqueous electrolyte secondary battery 10 illustrated in FIG. 1, a positive electrode lead 19 attached to the positive electrode 11 extends to the sealing assembly 17 side through a through hole of the insulating plate 18a, and is connected to the lower surface of the filter 22 which is the bottom plate of the sealing assembly 17 by welding or the like. As a result, the cap 26, which is the top plate of the sealing assembly 17 electrically connected to the filter 22, serves as a positive electrode terminal. A negative electrode lead 20a connected to the negative electrode 12 on a winding start side of the electrode assembly 14 and a negative electrode lead 20b connected to the negative electrode 12 on a winding end side of the electrode assembly 14 extend to a bottom side of the case body 16 through the insulating plate 18b and are connected to a bottom inner surface of the case body 16 by welding or the like. As a result, the case body 16 serves as a negative electrode terminal.

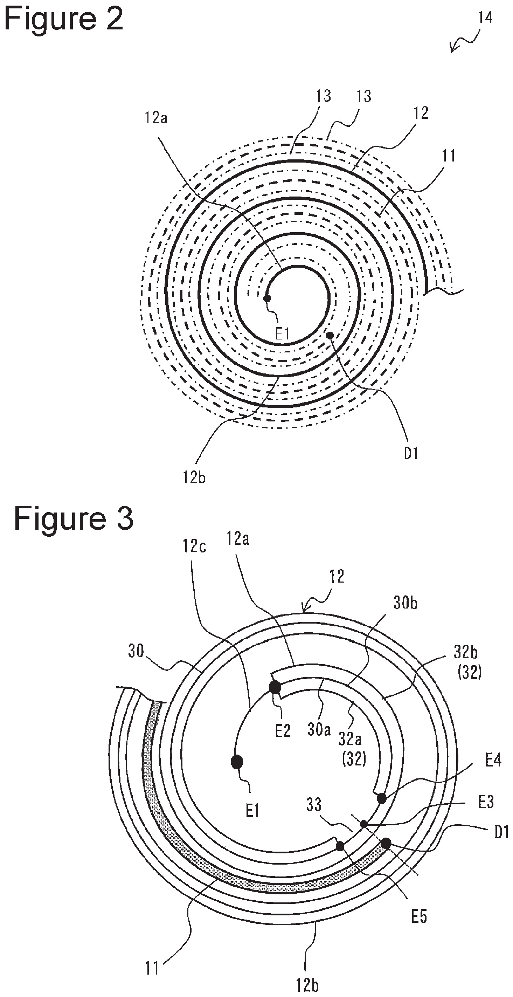

FIG. 2 is a view schematically illustrating a portion on an inner end side in a winding direction of an electrode assembly in the A-A cross section of FIG. 1. In FIG. 2, in order to make an arrangement relationship easy to understand, the negative electrode 12 is indicated by a solid line, the positive electrode 11 is indicated by a broken line, and the separator 13 is indicated by a one-dot chain line. In addition, in FIG. 2, gaps among the positive electrode 11, the negative electrode 12, and the separator 13 are exaggerated. The electrode assembly 14 is formed by winding the positive electrode 11 and the negative electrode 12 with the separator 13 interposed therebetween. Specifically, the belt-shaped positive electrode 11, the belt-shaped negative electrode 12, and the pair of belt-shaped separators 13 are laminated in an order of one separator 13, the positive electrode 11, the other separator 13, and the negative electrode 12, and then this laminate is spirally wound to produce the electrode assembly 14. In the electrode assembly 14, a longitudinal direction of each electrode is the winding direction, and a width direction of each electrode is a winding axis direction.

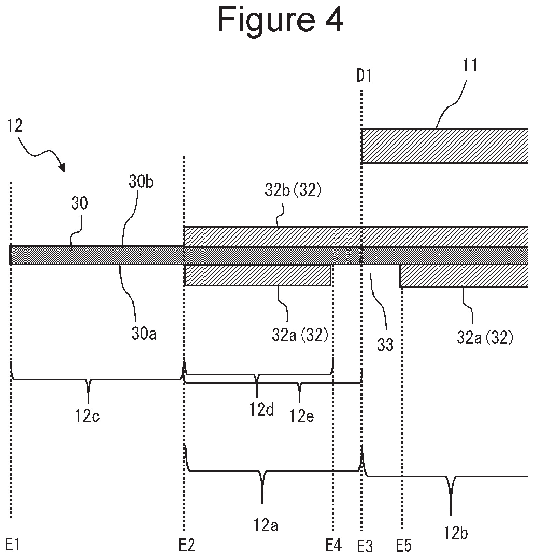

FIG. 3 is a schematic cross-sectional view illustrating configurations of a negative electrode and a positive electrode on the inner end side in the winding direction of the electrode assembly. FIG. 4 is a schematic cross-sectional view illustrating a state on a winding start end portion side of a negative electrode and a positive electrode before winding. In FIGS. 3 and 4, the separator 13 disposed between the positive electrode 11 and the negative electrode 12 is not illustrated. As illustrated in FIGS. 3 and 4, the negative electrode 12 includes, for example, a negative electrode core 30 and a negative electrode mixture layer 32 disposed on the negative electrode core 30. The negative electrode mixture layer 32 is formed on, for example, both surfaces of the negative electrode core 30, and has a negative electrode mixture layer 32a formed on an inner peripheral-side surface 30a of the negative electrode core 30 directed radially inward of the electrode assembly 14 and a negative electrode mixture layer 32b formed on an outer peripheral-side surface 30b of the negative electrode core 30 directed radially outward of the electrode assembly 14, out of both surfaces of the negative electrode core 30.

Further, as illustrated in FIGS. 2 to 4, the negative electrode mixture layer 32 has a non-facing portion 12a not facing the positive electrode 11 with the separator 13 interposed therebetween on the inner end side in the winding direction which is a winding start side of the electrode assembly 14. The negative electrode mixture layer 32 has a facing portion 12b that is disposed on the outer side in the winding direction from the outer end in the winding direction of the non-facing portion 12a following the non-facing portion 12a and faces the positive electrode 11 with the separator 13 interposed therebetween.

The non-facing portion 12a is a region from a point E3 of the negative electrode mixture layer 32, which faces the winding start end portion (point D1) of the positive electrode 11 on the inner peripheral side with the separator 13 interposed therebetween, to a point E2 which is the winding start end portion of the negative electrode mixture layer in the winding direction. That is, the point E2 corresponds to the inner end in the winding direction of the non-facing portion 12a, and the point E3 corresponds to the outer end in the winding direction of the non-facing portion 12a. The non-facing portion 12a has an inner peripheral-side mixture non-facing portion 12d formed of the negative electrode mixture layer 32a formed on the inner peripheral-side surface 30a of the negative electrode core 30 and an outer peripheral-side mixture non-facing portion 12e formed of the negative electrode mixture layer 32b formed on the outer peripheral-side surface 30b of the negative electrode core 30. In FIG. 3, both the inner ends in the winding direction of the inner peripheral-side mixture non-facing portion 12d and the outer peripheral-side mixture non-facing portion 12e are located at the point E2, but they may be located at different points. In this case, of the inner ends in the winding direction of the inner peripheral-side mixture non-facing portion 12d and the outer peripheral-side mixture non-facing portion 12e, the inner end in the winding direction of the non-facing portion 12a is located closer to the inner end in the winding direction of the negative electrode 12. As shown in FIGS. 3 and 4, the negative electrode 12 may have a core non-facing portion 12c in which the negative electrode mixture layer 32 is not formed on the surface of the negative electrode core 30 in a region from the inner end (point E2) in the winding direction of the non-facing portion 12a to the inner end (point E1) in the winding direction of the negative electrode 12.

In the present embodiment, the length in the winding direction of the non-facing portion 12a is a length of greater than or equal to 0.3 turns, preferably greater than or equal to 0.7 turns, and more preferably greater than or equal to 0.7 turns and less than or equal to 1.0 turn. When the length in the winding direction of the non-facing portion 12a satisfies the above range, for example, the circularity of the winding core of the electrode assembly 14 is maintained, and the winding core can function as a gas exhaust passage.

As described above, the non-facing portion 12a has the inner peripheral-side mixture non-facing portion 12d and the outer peripheral-side mixture non-facing portion 12e, but the lengths thereof in the winding direction may be different from each other. That is, the non-facing portion 12a may include a region having only one of the inner peripheral-side mixture non-facing portion 12d and the outer peripheral-side mixture non-facing portion 12e in the winding direction. Also with this configuration, for example, the circularity of the winding core of the electrode assembly 14 is maintained, and the winding core can function as a gas exhaust passage.

As shown in FIGS. 3 and 4, a recess 33 which straddles a boundary (point E3) between the non-facing portion 12a and the facing portion 12b is formed on the inner peripheral-side surface of the negative electrode mixture layer 32. That is, the recess 33 is at a position facing the winding start end portion (point D1) of the positive electrode 11 on the inner peripheral side with the separator 13 interposed therebetween. As a result, when the electrode assembly 14 expands with charge/discharge cycles, stress applied from the center of the electrode assembly 14 to the winding start end portion of the positive electrode 11 is alleviated by the recess 33 facing the winding start end portion of the positive electrode 11, so that electrode plate deformation near the winding start end portion of the positive electrode 11 is suppressed. Although not illustrated in the drawings, the recess 33 extends along the width direction of the negative electrode 12 parallel to the winding axis direction of the electrode assembly 14, and preferably extends from one end to the other end in the width direction of the negative electrode 12.

The recess 33 can be produced, for example, by forming the negative electrode mixture layer 32a on the inner peripheral-side surface 30a of the negative electrode core 30 and then scraping off the negative electrode mixture layer 32a corresponding to the position of the recess 33. When the negative electrode mixture layer 32a is scraped off, the negative electrode mixture layer 32a may be scraped off so that the inner peripheral-side surface 30a of the negative electrode core 30 is exposed, or a part of the negative electrode mixture layer 32a may be scraped off so that the negative electrode mixture layer 32a remains on the inner peripheral-side surface 30a of the negative electrode core 30.

The recess 33 shown in FIGS. 3 and 4 has a side wall of the negative electrode mixture layer 32a on the non-facing portion 12a side, a side wall of the negative electrode mixture layer 32a on the facing portion 12b side, and an inner bottom surface, the side walls facing each other. The inner bottom surface is an exposed portion in which the inner peripheral-side surface 30a of the negative electrode core 30 is exposed. In the present embodiment, the depth of the recess 33 is preferably greater than or equal to 50% of the thickness of the negative electrode mixture layer 32a, and more preferably 100% of the thickness of the negative electrode mixture layer 32a, that is, the inner bottom surface of the recess 33 is an exposed portion in which the inner peripheral-side surface 30a of the negative electrode core 30 is exposed, from the viewpoint that the stress applied to the winding start end portion of the positive electrode 11 with charge/discharge cycles is further alleviated, for example. The thickness of the negative electrode mixture layer 32a is a value obtained by measuring the thickness of the negative electrode mixture layer 32a around the recess 33 at 5 points and averaging these values. The depth of the recess 33 is a value obtained by measuring the depth of the recess 33 at any position at 5 points and averaging these values.

In the present embodiment, the length in the winding direction of the recess 33 from the boundary (point E3) to the outer end (point E5) in the winding direction of the recess 33 is a length of less than 1 turn. When the length in the winding direction from the boundary to the outer end in the winding direction of the recess 33 is set to greater than or equal to 1 turn, the recess 33 is disposed up to the region of the negative electrode 12 that causes a battery reaction with the positive electrode 11. Therefore, lithium dendrite may be generated in the negative electrode 12 with the charge/discharge cycles of the battery, and the battery performance may be deteriorated.

The length in the winding direction of the recess 33 from the inner end in the winding direction of the recess 33 (point E4) to the boundary (point E3) is preferably a length greater than or equal to 0.1 turns, and more preferably greater than or equal to 0.1 turns and less than or equal to 0.2 turns. The length in the winding direction of the recess 33 from the boundary to the outer end in the winding direction of the recess 33 is preferably a length greater than or equal to 0.1 turns and less than 1 turn, and more preferably greater than or equal to 0.2 turns and less than 1 turn. When the length in the winding direction of the recess 33 satisfies the above range, the stress applied to the winding start end portion of the positive electrode 11 with charge/discharge cycles is further alleviated, and the electrode plate deformation near the winding start end portion of the positive electrode 11 may be further suppressed.

As in the present embodiment, the negative electrode 12 preferably has a core non-facing portion 12c. The core non-facing portion 12c is preferably wound, for example, greater than or equal to 0.5 turns from the inner end in the winding direction (point E2) of the non-facing portion 12a toward the inner side in the winding direction from the viewpoint of securing an installation space of the negative electrode lead 20a illustrated in FIG. 1. The negative electrode lead 20a illustrated in FIG. 1 is preferably connected to the negative electrode core 30 of the core non-facing portion 12c provided in the non-facing portion 12a by welding or the like. That is, the negative electrode lead 20a is preferably connected to the negative electrode core 30 on the inner end side in the winding direction of the electrode assembly 14. For example, the negative electrode lead 20b provided on the outer end side in the winding direction of the electrode assembly 14 and the negative electrode lead 20a provided on the inner end side in the winding direction collect current at two places, so that the resistance component of the battery can be reduced. The negative electrode core 30 on the outer end side in the winding direction of the electrode assembly 14 may be brought into contact with the case body 16. This makes it possible to further reduce the resistance component of the battery.

As the negative electrode core 30 constituting the negative electrode 12, a foil of a metal that is stable in a potential range of the negative electrode, such as copper or a copper alloy, a film in which the metal is disposed on a surface layer thereof, or the like can be used. The thickness of the negative electrode core 30 is, for example, greater than or equal to 10 µm and less than or equal to 50 µm.

The negative electrode mixture layer 32 constituting the negative electrode 12 contains, for example, a negative electrode active material, a binder, and the like. The thickness of the negative electrode mixture layer 32 is, for example, in a range of greater than or equal to 10 µm and less than or equal to 100 µm. The negative electrode 12 can be produced, for example, by applying a negative electrode mixture slurry containing a negative electrode active material, a binder, and the like onto the negative electrode core 30, drying a coating film, and then rolling the coating film to form the negative electrode mixture layer 32 on the negative electrode core 30.

The negative electrode active material contained in the negative electrode mixture layer 32 is not particularly limited, for example, as long as it can reversibly store and release lithium ions, and examples thereof include a carbon material and a Si-based material. The negative electrode active material preferably contains a Si-based material from the viewpoint of increasing the capacity of the battery.

The carbon material may be, for example, a conventionally known carbon material used as the negative electrode active material, and examples thereof include natural graphite such as flake graphite, massive graphite, and earthy graphite, and artificial graphite such as massive artificial graphite (MAG) and graphitized mesophase carbon microbeads (MCMB).

The Si-based material contains, for example, a lithium ion conducting phase and Si particles dispersed in the lithium ion conducting phase. The lithium ion conducting phase contains, for example, at least one of a silicon oxide phase, a silicate phase, and a carbon phase.

The silicate phase preferably contains, for example, at least one element of alkali metal elements of lithium, sodium, potassium, rubidium, cesium, and francium, and Group 2 elements of the periodic table to which beryllium, magnesium, calcium, strontium, barium, and radium belong from the viewpoint of high lithium ion conductivity and the like. Among them, the silicate phase is preferably a silicate phase containing lithium (hereinafter, may be referred to as a lithium silicate phase) from the viewpoint of high lithium ion conductivity and the like.

The lithium silicate phase is represented by, for example, a formula: Li_{2z}SiO_{2+z} (0 < z < 2). From the viewpoints of stability, ease of production, lithium ion conductivity, and the like, z preferably satisfies the relation of 0 < z < 1, and more preferably z = 1/2.

The Si-based material in which the Si particles are dispersed in the silicon oxide phase is represented by, for example, a general formula SiOₓ (a range of 0 < x < 2 is preferable, and a range of 0.5 ≤ x ≤ 1.6 is more preferable). The Si-based material in which the Si particles are dispersed in the carbon phase is represented by, for example, a general formula SiₓC_{y} (ranges of 0 < x ≤ 1 and 0 < y ≤ 1 are preferable).

A conductive layer coated with conductive carbon may be formed on the surface of the Si-based material. The conductive layer can be formed with, for example, a CVD method in which acetylene, methane, or the like is used, a method in which coal pitch, petroleum pitch, a phenol resin, or the like is mixed with a silicon-based active material and the mixture is heat-treated, or the like. As a heat treatment apparatus that performs the heat treatment, for example, a hot air furnace, a hot press, a lamp, a sheath heater, a ceramic heater, a rotary kiln, or the like can be used. In addition, the conductive layer may be formed by fixing a conductive filler such as carbon black to a particle surface of the Si-based material using a binder.

The content of the Si-based material is, for example, preferably greater than or equal to 5 mass% with respect to the total mass of the negative electrode mixture layer 32 from the viewpoint of increasing the capacity of the battery.

In addition to the carbon material and the Si-based material, examples of the negative electrode active material that can reversibly store and release lithium ions include Sn, an alloy containing Sn, a Sn-based material such as tin oxide, and a Ti-based material such as lithium titanate.

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO).

The positive electrode 11 includes a positive electrode core and a positive electrode mixture layer formed on a surface of the positive electrode core. The positive electrode mixture layer is preferably formed on both surfaces of the positive electrode core. As the positive electrode core, a foil of a metal that is stable in a potential range of the positive electrode 11, such as aluminum, a film in which the metal is disposed on a surface layer thereof, or the like can be used. The positive electrode mixture layer contains, for example, a positive electrode active material, a binder, a conductive agent, and the like. The positive electrode 11 can be produced, for example, by applying a positive electrode mixture slurry containing the positive electrode active material, the binder, the conductive agent, and the like onto the positive electrode core, drying a coating film, and then rolling the coating film to form the positive electrode mixture layer on both surfaces of the positive electrode core.

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₃, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). One kind of them may be used alone, or a plurality of kinds of them may be used in combination. From the viewpoint of achieving the high capacity of the non-aqueous electrolyte secondary battery, the positive electrode active material preferably contains a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 <x ≤ 1.2, 0 < y ≤ 0.9, and 2.0 ≤ z ≤ 2.3). Inorganic particles such as tungsten oxide, aluminum oxide, or a lanthanoid-containing compound may be fixed to the particle surface of the lithium transition metal oxide.

Examples of the conductive agent contained in the positive electrode mixture layer include carbon materials such as carbon black (CB), acetylene black (AB), Ketjenblack, carbon nanotube (CNT), graphene, and graphite. The binder contained in the positive electrode mixture layer may be the same as that in the negative electrode 12.

As the separator 13, for example, a porous sheet having an ion permeation property and an insulation property is used. Specific examples of the porous sheet include microporous thin films, woven fabrics, and nonwoven fabrics. As the material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. In addition, a multi-layer separator including a polyethylene layer and a polypropylene layer may be used, and the separator 13 whose surface is coated with a material such as an aramid-based resin or ceramic may be used.

### [Supplementary Notes]

(1) A non-aqueous electrolyte secondary battery comprising:
   an electrode assembly in which a positive electrode and a negative electrode are wound with a separator interposed therebetween; and
   a non-aqueous electrolyte,
   wherein
   the negative electrode includes a negative electrode mixture layer disposed on a surface of a negative electrode core,
   the negative electrode mixture layer includes a non-facing portion disposed on an inner end side in a winding direction of the electrode assembly and not facing the positive electrode with the separator interposed therebetween, and a facing portion disposed on an outer side in the winding direction from an outer end in the winding direction of the non-facing portion and facing the positive electrode with the separator interposed therebetween,
   a length in the winding direction of the non-facing portion is a length of greater than or equal to 0.3 turns,
   a recess straddling a boundary between the non-facing portion and the facing portion is formed on an inner peripheral-side surface of the negative electrode mixture layer, and
   a length in the winding direction of the recess from the boundary to an outer end in the winding direction of the recess is a length of less than 1 turn.
(2) The non-aqueous electrolyte secondary battery according to the above (1),
   wherein a depth of the recess is greater than or equal to 50% of a thickness of the negative electrode mixture layer.
(3) The non-aqueous electrolyte secondary battery according to the above (1) or (2), wherein an inner bottom surface of the recess is an exposed portion in which an inner peripheral-side surface of the negative electrode core is exposed.
(4) The non-aqueous electrolyte secondary battery according to any one of the above (1) to (3), wherein the length in the winding direction of the non-facing portion is a length of greater than or equal to 0.7 turns.
(5) The non-aqueous electrolyte secondary battery according to any one of the above (1) to (4), wherein a length in the winding direction of the recess from an inner end in the winding direction of the recess to the boundary is a length of greater than or equal to 0.1 turns, and the length in the winding direction of the recess from the boundary to the outer end in the winding direction of the recess is a length of greater than or equal to 0.1 turns and less than 1 turn.
(6) The non-aqueous electrolyte secondary battery according to the above (5), wherein the length in the winding direction of the recess from the boundary to the outer end in the winding direction of the recess is a length of greater than or equal to 0.2 turns and less than 1 turn.

### REFERENCE SIGNS LIST

- 10: Non-aqueous electrolyte secondary battery
- 11: Positive electrode
- 12: Negative electrode
- 12a: Non-facing portion
- 12b: Facing portion
- 12c: Core non-facing portion
- 12d: Inner peripheral-side mixture non-facing portion
- 12e: Outer peripheral-side mixture non-facing portion
- 13: Separator
- 14: Electrode assembly
- 15: Battery case
- 16: Case body
- 17: Sealing assembly
- 18a, 18b: Insulating plate
- 19: Positive electrode lead
- 20a, 20b: Negative electrode lead
- 21: Projecting portion
- 22: Filter
- 23: Lower vent member
- 24: Insulating member
- 25: Upper vent member
- 26: Cap
- 27: Gasket
- 30: Negative electrode core
- 30a: Inner peripheral-side surface
- 30b: Outer peripheral-side surface
- 32, 32a, 32b: Negative electrode mixture layer
- 33: Recess

## Claims

1. A non-aqueous electrolyte secondary battery comprising:
an electrode assembly in which a positive electrode and a negative electrode are wound with a separator interposed therebetween; and
a non-aqueous electrolyte,
wherein
the negative electrode includes a negative electrode mixture layer disposed on a surface of a negative electrode core,
the negative electrode mixture layer includes a non-facing portion disposed on an inner end side in a winding direction of the electrode assembly and not facing the positive electrode with the separator interposed therebetween, and a facing portion disposed on an outer side in the winding direction from an outer end in the winding direction of the non-facing portion and facing the positive electrode with the separator interposed therebetween,
a length in the winding direction of the non-facing portion is a length of greater than or equal to 0.3 turns,
a recess straddling a boundary between the non-facing portion and the facing portion is formed on an inner peripheral-side surface of the negative electrode mixture layer, and
a length in the winding direction of the recess from the boundary to an outer end in the winding direction of the recess is a length of less than 1 turn.

2. The non-aqueous electrolyte secondary battery according to claim 1, wherein a depth of the recess is greater than or equal to 50% of a thickness of the negative electrode mixture layer.

3. The non-aqueous electrolyte secondary battery according to claim 1 or 2, wherein an inner bottom surface of the recess is an exposed portion in which an inner peripheral-side surface of the negative electrode core is exposed.

4. The non-aqueous electrolyte secondary battery according to claim 1 or 2, wherein the length in the winding direction of the non-facing portion is a length of greater than or equal to 0.7 turns.

5. The non-aqueous electrolyte secondary battery according to claim 1 or 2, wherein a length in the winding direction of the recess from an inner end in the winding direction of the recess to the boundary is a length of greater than or equal to 0.1 turns, and a length of the recess in the winding direction from the boundary to an outer end in the winding direction of the recess is a length of greater than or equal to 0.1 turns and less than 1 turn.

6. The non-aqueous electrolyte secondary battery according to claim 5, wherein the length in the winding direction of the recess from the boundary to the outer end in the winding direction of the recess is a length of greater than or equal to 0.2 turns and less than 1 turn.
